# EUROPEAN PATENT SPECIFICATION

(11) **EP 1 831 127 B1**
(45) Date of publication and mention of the grant of the patent: **22.12.2010**
(21) Application number: 05724992.2
(22) Date of filing: 08.03.2005
(51) Int. Cl.: C04B 28/02, C04B 28/14, C04B 41/62

(54) **BUILDING MATERIALS WITH BIORESISTANT PROPERTIES**
BAUMATERIALIEN MIT BIORESISTENTEN EIGENSCHAFTEN
MATERIAUX DE CONSTRUCTION AVEC DES PROPRIETES BIORESISTANTES

(30) Priority: 16.12.2004 US 14635
(43) Date of publication of application: 12.09.2007
(73) Proprietor: James Hardie Technology Limited, Dublin 2 (IE)
(72) Inventor: LIGHTER, James, Edward, Jr., Temecula, California 92591 (US); LUO, Caidian, Alta Loma, California 91737 (US); MERKLEY, Donald, James, Alta Loma, California 91737 (US); ORMONDE, Trina, Ann, Bloomington, California 92316 (US)
(74) Representative: Mallalieu, Catherine Louise
(86) International application number: PCT/US2005/007581
(87) International publication number: WO 2006/065259

(56) References cited:
- US-A- 3 998 944
- US-A- 5 421 867
- US-A1- 2002 069 791
- US-B1- 6 475 275
- DATABASE CA [Online] CHEMICAL ABSTRACTS SERVICE, COLUMBUS, OHIO, US; SHAPIRO, A. D. ET AL: "Manufacture of board resistant to biological degradation" XP002335287 retrieved from STN Database accession no. 1961:146882 & BUMAZHNAYA PROMYSHLENNOST , 36(NO. 7), 12-13 CODEN: BUMPAK; ISSN: 0007-5817, 1961,
- DATABASE WPI Section Ch, Week 198610 Derwent Publications Ltd., London, GB; Class C03, AN 1986-066741 XP002335289 & JP 61 019900 A (IG GIJUTSU KENKYUSHO KK) 28 January 1986 (1986-01-28)
- CHEMICAL ABSTRACTS, vol. 94, no. 8, 23 February 1981 (1981-02-23), Columbus, Ohio, US; abstract no.: 51915a, XP000186251 & JP 55 085756 A (KUBOTA LTD) 28 June 1980 (1980-06-28)
- PATENT ABSTRACTS OF JAPAN vol. 015, no. 133 (C-0820), 2 April 1991 (1991-04-02) & JP 03 016978 A (KUBOTA LTD), 24 January 1991 (1991-01-24)

## Description

### Background of the Invention

### Field of the Invention

This invention relates to composite building materials, and more particularly to a composite building material that is resistant to undesirable biological growth such as mold, mildew, algae and the like, including material treatment methods, formulations, methods of manufacture and products with improved material properties relating to the same.

### Description of the Related Art

Mold and mildew growth can occur in walls of residential or industrial buildings with poor ventilation or excessive moisture either inside or outside of the structure. For example, bathrooms, laundry rooms, basements can be susceptible to mold growth if temperature and humidity conditions are maintained in a range that supports mold growth. In addition to moisture, mold or mildew also needs a food source. Some building products contain materials that can support the growth of mold or mildew such as the paper covering on gypsum panels or organic fibers in the tile backer boards. As such, there is a need to inhibit mold growth in both residential and industrial buildings as it can be appreciated that the presence of mold, mildew, and fungus in any part of a building structure is generally not desirable.

While biocides have been added to various coating materials such as paints and sealants to resist mold and mildew growth, most of the conventional biocides do not survive well in alkaline environment, such as that found in fiber cement and concrete building materials. Moreover, biocides incorporated into a coating such as paints and sealants often do not effectively protect the underlying building article as it is difficult for the biocide to diffuse through the coating and contact the underlying surface. Additionally, the conventional biocides are typically not suitable for direct application to certain building materials as the biocides may react directly with materials commonly used in building articles, such as cement, gypsum and wood, thereby weakening them over the long term.
US Patent Application Publication No. US2002/0069791 teaches a composite building material, comprising:
a cementitious mixture; and
individualized cellulose fibers incorporated into the cementitious matrix, wherein the cellulose fibers are at least partially treated with a biocide chemical that inhibits microorganism growth inside the fibers.

US Patent No. 3,998,944 teaches a fungicidal porous paper cover sheet for gypsum wallboard.
US Patent No. 5,421,867 teaches a grout or mortar cementitious composition comprising a mixture of:
a. portland cement present in an amount of from about 50 to 99% by weight;
b. fine silica sand present in an amount of from about 0 to 50%; and
c. an aqueous suspension of copper-8-quinolinolate having a molecular weight of 345.83.
US Patent No. 6,475,275 teaches a cement composition, comprising:
(a) 35-85% by weight of a cement,
(b) 3-15% by weight of a swellable clay,
(c) 1-50% by weight of at least one member selected from the group consisting of an aggregate and a fibrous material, and
(d) 0.7-1.0% be weight of a high efficiency retarder.

### Summary of the Invention

In view of the foregoing, there is a need for a mold resistant building article, such as tile backer boards, decking, fencing, roofing, cladding, soffit, trim, or sheathing. To this end, there is a particular need for an effective biocide treatment for protecting composite materials such as cement, fiber cement, gypsum, gypsum fiber composite, wood, hardboard, medium density fiberboard, oriented strandboard, and wood/polymer composites against mold, mildew and other undesirable biological growth. There is also a need for a biocide that is heat and/or alkali stable and can be directly applied to the building article surface or incorporated into the matrix of the building article without adversely affecting the strength or performance of the article.

As used herein, the term "biocide" shall refer to any substance that destroys or inhibits the growth of fungi, mold, algae, lichens, mildew, or bacteria, which includes but is not limited to biocides, antimicrobials, antibacterial agents, antifungal agents, fungicides, bactericides, germicides, insecticides, mildewcides, and the like. The term "mold" shall refer to any organism that can degrade, destroy or live off of organic matter, which includes but is not limited to mold, mildew, fungus, bacteria, lichen, and the like. The term "mold resistant building article" shall refer to a building article that utilizes a biocide to inhibit mold growth on or in the article.

According to one aspect of the present invention there is provided a building article comprised of a material selected from the group consisting of fiber cement, gypsum fiber composite, and medium density fiberboard and having a first surface, wherein a solution comprising 0.2% to 1% copper oxine, 1% to 10% latex sealer, and at least 50% water by weight is adhered to a first surface of the article, wherein the copper oxine directly contacts the first surface and extends into subsurface layers of the building article. Thus the present invention provides a building article incorporating copper oxine (also know as copper oxone, Bis (8-oxyquinoline) copper, copper 8-hydroxyquinoline or copper 8-hydroxyquinolate) as a biocide to inhibit mold growth.
In some implementations, a coating is formed on the first surface of the article to cover the copper oxine thereon. The coating is preferably selected from the group consisting of primers, sealants, and paints. The articles incorporating biocide can be a variety of different building products such as those selected from the group consisting of tile backer boards, decks, soffits, trims, decoking, fencing, roofing, cladding, and sheathing. Additionally, the building article can comprise a board, a plank, a flat sheet, a panel, or a stake.

According to another aspect of the present invention there is provided a method of forming fiber cement board that is resistant to mold growth, comprising:
forming a fiber cement board having a first surface; and
applying copper oxine to said first surface via a solution comprising 0.1%-2% copper oxine, 1%-10% latex sealer and at least 50% water by weight, wherein said surface is selected from the group consisting of exterior surface, unfinished surface, pre-finished surface, and finished surface. Thus the present invention provides a method of forming a building article that is resistant to mold growth. All percentages specified herein are weight percentages unless otherwise noted.

In some implementations, the biocide penetrates the first surface of the article and extends into subsurface layers of the article, preferably for a depth of at least 10 microns. The building article can include a variety of different building products such as those selected from the group consisting of primed fiber cement articles, pro-finished fiber cement articles, tile backer boards, decks, soffits, trims, decking, fencing, roofing cladding, and sheathing.
In another embodiment, applying the biocide comprises spraying a solution containing the biocide directly to the first surface. In one embodiment, applying the biocide comprises applying a biocide having a viscosity of between about 1 and 1,000 centipoises. The biocide can also be applied to the first surface by a method selected from the group consisting of spray coating, dip coating, curtain coating, roller or brush coating, flooding, and vacuum coating. In certain embodiments, the method further comprises applying a sealant to the fiber cement article after applying the biocide to the first surface of the article.

### Brief Description of the Drawings

Figure 1 illustrates a method of manufacturing a mold resistant building article with a biocide surface treatment; and

Figure 2 illustrates a building article incorporating a surface treatment that is substantially resistant to mold growth; and

### Detailed Description of the Preferred Embodiments

Certain preferred embodiments of the present invention provide a building article that is treated with a biocide which renders the building article substantially resistant to mold growth, including formulations and methods for making such an article. The mold resistant building article can include both interior and exterior building products such as tile backer boards, cladding, trim, roofing, fencing, fascia, soffits, sheathing, and the like.

The biocide is imparted to the building article by a biocide surface treatment. A solution or mixture containing the biocide can be applied to a surface of the building article by a variety of different methods including but not limited to spray coating, dip coating, curtain coating, roller or brush coating, flooding, and vacuum coating. In one embodiment, the biocide surface treatment can be applied to a treated or an untreated building article, such as a fiber cement board. The biocide can be applied to a surface of the building article in a manner such that the biocide directly contacts the building article or that the biocide is embedded in and carried by a layer of coating such as sealant or paint that is applied to a surface of the article. For example, the biocide surface treatment can be applied to primed fiber cement boards in which the biocide is incorporated into the primer. Alternatively, the biocide surface treatment can also be applied to a pre-finished fiber cement board by incorporating a biocide into the paint. In certain embodiments, a biocide surface treatment can be applied to the surface of the article followed immediately by the application of a film forming sealer.

The biocide surface treatment entails applying a solution comprising 1%-10% of a latex sealer, preferably 4%-8%, more preferably 6%; and at least 50% water, preferably 75%-95%, more preferably 93.5% by weight.
The biocide surface treatment solution or mixture preferably has a pre-selected viscosity to allow the subsurface penetration or to enable the material to remain on the surface as desired. In one embodiment, the biocide surface treatment solution or mixture has a viscosity between 1-1,000 centipoise.

In one implementation, the biocide surface treatment solution or mixture is applied using a spray coater in which the biocide application is 6 to 8 wet grams/square foot (66 to 89 wet grams/m²) on one side, creating a thin film of biocide surface treatment. The biocide surface treatment is allowed to penetrate below the surface of the article, preferably at least 10 micron below the surface. The biocide surface treatment solution containing a latex may be dried by various types of curing methods. The curing methods include thermal curing such as infrared and hot air or radiation curing such as UV (ultra violet) and EB (electron beam) or any other methods that can reach a temperature, preferably about 350°F (175°C), that is sufficient to dry, cure, or activate the surface treatment in a short amount of time.

The biocide surface treatment is applied to a variety of different building materials namely fiber cement, gypsum fiber composite and medium density fibreboard. For fiber cement articles, it is preferred that the biocide solution be directly sprayed onto a surface of the article in a manner such that the biocide directly contacts the fiber cement. By directly contacting the fiber cement, the biocide imparts mold resistant properties to the fiber cement itself as opposed to providing such properties only to the coating covering the fiber cement.

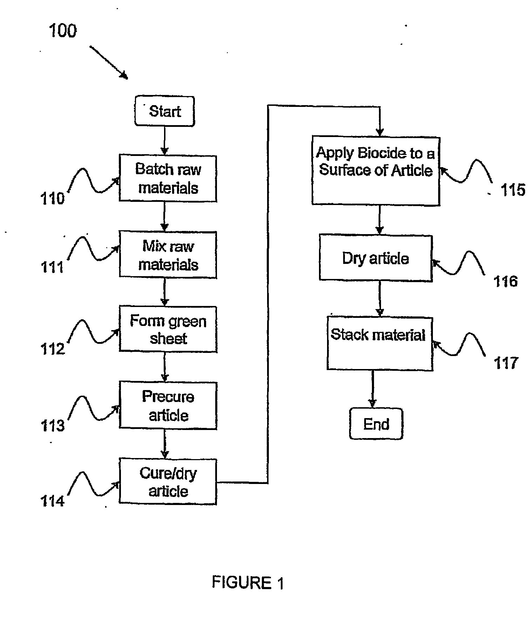

Figure 1 illustrates a method 100 of manufacturing a mold resistant building article by applying a biocide treatment to a surface of the building article. The method 100 includes the following steps:

### Step 110: Batch raw materials

In this step, raw materials are batched in accordance with known formulations and operation procedures.

A formulation of a preferred embodiment of this step includes:
- about 10%-80% cement (cementitious binder);
- about 20%-80% silica (aggregates);
- about 0%-50% density modifiers;
- about 0-10% additives; and
- about 0.5%-20% cellulose fibers, or a combination of biocide treated cellulose fibers, and/or regular cellulose fiber, and/or natural inorganic fibers, and/or synthetic fibers.

### Step 111: Mix raw materials

In this step, raw materials are mixed together using known techniques to create a fiber cement mixture.

### Step 112: Form green sheet

In this step, the fiber cement mixture is made into a fiber cement article by methods such as the Hatschek process, extrusion, mazza former, magnani, flow-on, casting, injection molding, hand lay-up, filter pressing, fourdrinier forming, multi-wire forming, gap blade forming, gap roll/blade forming, bel-roll forming, and others.

### Step 113: Precure the article

In this step, the fiber cement article is precured for at least 12-24 hours. This typically takes place in an ambient environment

### Step 114: Cure article

In this step, the fiber cement article is cured in an autoclave at elevated temperatures such as at about 180 °C and pressures for at least 8 hours. Alternatively, the article can be cured for 25 to 30 days at ambient conditions.

### Step 115: Apply biocide mixture to Article

In this step, the biocide is applied directly to the fiber cement. 0.2% to 1% copper oxine is mixed with at least 50% water, and 1%-10% latex sealer. The application amount can be 2 - 12 wet grams/ft², more preferably 4 - 10 wet grams/ft² (44 - 111 grams/m²), and most preferably 6 - 8 wet grams/square foot (66 to 89 wet grams/m²) on the article. The treatment is only on the surface and forms a thin film over the article. At least one side is coated (the side towards the wet area), but all sides can be coated. The treatment is applied with a spray coater or any means suitable for a coating process, such as curtain coating, brush coating, roller, flooding, dip, or the like. Alternatively, it is also possible to surface treat the article between each of the micro-layers to instill biocide protection, particularly if the article is layered.

### Step 116: Dry article

In this step, the recently sealed board goes through an array of drying ovens or heaters at a temperature near 350°F, or 175°C, on a moving conveyor. Other means of drying the surface treatment include radiation curing, including UV and EB or thermal curing using infrared or hot air.

### Step 117: Stack material for shipping

In this step, the fiber cement articles are stacked and packaged for storage or shipment.

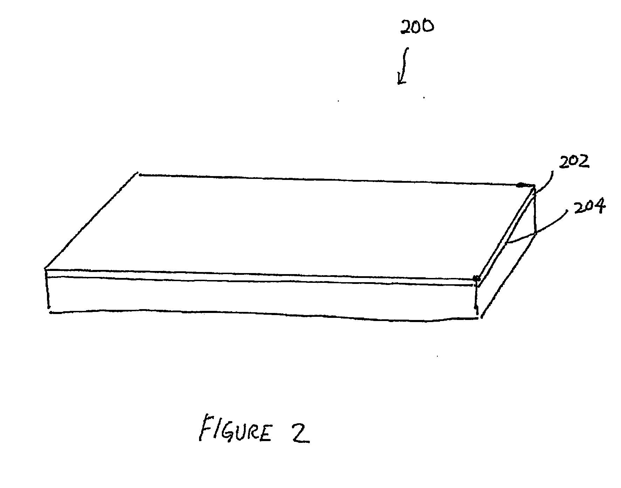

Figure 2 illustrates a building article 200 comprising a surface treatment 202 that is substantially resistant to mold growth. As shown in Figure 2, the surface treatment 202 is applied directly to a first surface 204 of the article 200. Preferably, the first surface 204 is positioned adjacent to a wet area when installed. In one embodiment, the surface treatment 202 is a thin film and can be applied using a variety of known techniques. The building article shown in Figure 2 can be a tile backer board, deck, fence, trim, soffit, fascia, or the like. The building article can be made of a material namely fiber cement, gypsum fiber composite, and medium density fiberboard.

The biocide treatment entails applying a solution comprising 0.1%-2% copper oxine, preferably 0.2%-1%, more preferably 0.5% copper oxine to the wood or cellulosic materials by spraying.

The foregoing description of the preferred embodiment of the present invention has shown, described and pointed out the fundamental novel features of the invention. It will be understood that various omissions, substitutions, and changes in the form of the details of the invention may be made by those skilled in the art, without departing from the scope of the invention. Consequently, the scope of the invention should not be limited to the foregoing discussions, but should be defined by the appended claims.

## Claims

1. A building article comprised of a material selected from the group consisting of fiber cement, gypsum fiber composite, and medium density fiberboard and having a first surface, wherein a solution comprising 0.2% to 1% copper oxine, 1% to 10% latex sealer, and at least 50% water by weight is adhered to a first surface of the article, wherein the copper oxine directly contacts the first surface and extends into subsurface layers of the building article.

2. The building article of Claim 1, further comprising a coating formed on the first surface of the article to cover the copper oxine thereon.

3. The building article of Claim 2, wherein said coating is selected from the group consisting of primers, sealants, and paints.

4. The building article of Claim 1, wherein the solution comprises 0.5% to 1% copper oxine by weight.

5. The building article of Claim 1, wherein the building article is selected from the group consisting of tile backer boards, decks, soffits, trims, decking, fencing, roofing, cladding, and sheathing.

6. The building article of Claim 1, wherein the building article comprises a board.

7. The building article of Claim 1, wherein the building article comprises a plank.

8. The building article of Claim 1, wherein the building article comprises a stake.

9. A method of forming fiber cement board that is resistant to mold growth, comprising:
forming a fiber cement board having a first surface; and
applying copper oxine to said first surface via a solution comprising 0.2%-1% copper oxine, 1%-10% sealer and at least 50% water by weight, wherein said surface is selected from the group consisting of exterior surface, unfinished surface, pre-finished surface, and finished surface.

10. The method of Claim 9, wherein forming a building article comprises forming a plank.

11. The method of Claim 9, wherein forming a building article comprises forming a stake.

12. The method of Claim 9, further comprising applying a sealant to the fiber cement article after applying the copper oxine solution to the first surface of the article.

13. The method of Claim 9, wherein applying said copper oxine comprises spraying a solution containing said copper oxine directly to the first surface

14. The method of Claim 9, wherein applying said copper oxine comprises applying a solution having a viscosity of between 1 and 1,000 centipoises.

15. The method of Claim 9, wherein the copper oxine solution is applied to the first surface by a method selected from the group consisting of spray coating, dip coating, curtain coating, roller or brush coating, flooding, and vacuum coating.

16. The method of Claim 9, wherein said solution comprises 0.5% copper oxine by weight.

17. The method of Claim 9 or 16, wherein said solution comprises 4%-8% latex sealer and 75%-95% water by weight.

18. The method of Claim 17, wherein said solution comprises 6% latex sealer and 93.5% water by weight.

## Patentansprüche

1. Baugegenstand, der ein Material umfasst, das aus der Gruppe bestehend aus Faserzement, Gipsfaserverbundwerkstoff und mitteldichter Faserplatte ausgewählt ist, und mit einer ersten Oberfläche, wobei eine Lösung, die 0,2 bis 1 Gew.-% Kupferoxin, 1 bis 10 Gew.-% Latexsiegler und wenigstens 50 Gew.-% Wasser umfasst, an eine erste Oberfläche des Gegenstands gebunden wird, wobei das Kupferoxin die erste Oberfläche direkt berührt und sich in die unter der Oberfläche liegenden Schichten des Baugegenstands erstreckt.

2. Baugegenstand nach Anspruch 1, der darüber hinaus eine auf der ersten Oberfläche des Baugegenstands gebildete Beschichtung umfasst, um das Kupferoxin darauf zu bedecken.

3. Baugegenstand nach Anspruch 2, wobei die Beschichtung aus der Gruppe bestehend aus Grundiermitteln, Dichtmitteln und Farben ausgewählt ist.

4. Baugegenstand nach Anspruch 1, wobei die Lösung 0,5 bis 1 % Gew.-% Kupferoxin umfasst.

5. Baugegenstand nach Anspruch 1, wobei der Baugegenstand aus der Gruppe bestehend aus Fliesenträgern, Abdeckungen, Soffiten, dekorativen Elementen, Bodenbelägen, Einzäunungen, Bedachungen, Fassaden und Verkleidungen ausgewählt ist.

6. Baugegenstand nach Anspruch 1, wobei der Baugegenstand eine Platte umfasst.

7. Baugegenstand nach Anspruch 1, wobei der Baugegenstand eine Bohle umfasst.

8. Baugegenstand nach Anspruch 1, wobei der Baugegenstand einen Pfahl umfasst.

9. Verfahren zum Ausbilden einer Faserzementplatte, die gegen Schimmelbildung resistent ist, das umfasst:
Ausbilden einer Faserzementplatte mit einer ersten Oberfläche, und
Aufbringen von Kupferoxin auf die erste Oberfläche mittels einer Lösung, die 0,2 bis 1 Gew.-% Kupferoxin, 1 bis 10 Gew.-% Siegler und wenigstens 50 Gew.-% Wasser umfasst, wobei die Oberfläche aus der Gruppe bestehend aus außenliegender Oberfläche, unbehandelter Oberfläche, vorbehandelter Oberfläche und fertig behandelter Oberfläche ausgewählt ist.

10. Verfahren nach Anspruch 9, wobei das Ausbilden eines Baugegenstands das Ausbilden einer Bohle umfasst.

11. Verfahren nach Anspruch 9, wobei das Ausbilden eines Baugegenstands das Ausbilden eines Pfahls umfasst.

12. Verfahren nach Anspruch 9, das darüber hinaus das Aufbringen eines Dichtmittels auf den Faserzementgegenstand nach dem Aufbringen der Kupferoxinlösung auf die erste Oberfläche des Gegenstands umfasst.

13. Verfahren nach Anspruch 9, wobei das Aufbringen des Kupferoxins das direkte Aufsprühen einer Lösung mit dem Kupferoxin auf die erste Oberfläche umfasst.

14. Verfahren nach Anspruch 9, wobei das Aufbringen des Kupferoxins das Aufbringen einer Lösung mit einer Viskosität zwischen 1 und 1.000 Cp umfasst.

15. Verfahren nach Anspruch 9, wobei die Kupferoxinlösung auf die erste Oberfläche mit einem Verfahren ausgewählt aus der Gruppe bestehend aus Beschichten durch Aufsprühen, Tauchbeschichten, Florstreichen, Walzen- oder Bürstenstreichen, Flutbeschichten und Vakuumbeschichten aufgebracht ist.

16. Verfahren nach Anspruch 9, wobei die Lösung 0,5 Gew.-% Kupferoxin umfasst.

17. Verfahren nach Anspruch 9 oder 16, wobei die Lösung 4 - 8 Gew.-% Latexsiegler und 75 - 95 Gew.-% Wasser umfasst.

18. Verfahren nach Anspruch 17, wobei die Lösung 6 Gew.-% Latexsiegler und 93,5 Gew.-% Wasser umfasst.

## Revendications

1. Article de construction comprenant un matériau choisi dans le groupe comprenant le fibrociment, un composite de plâtre et fibres, et un panneau de fibres de moyenne densité et ayant une première surface, dans lequel une solution comprenant 0,2 % à 1 % d'oxine de cuivre, 1 % à 10 % d'enduit latex, et au moins 50 % d'eau en poids adhère à une première surface de l'article, l'oxine de cuivre étant directement en contact avec la première surface et s'étendant dans des couches subsuperficielles de l'article de construction.

2. Article de construction selon la revendication 1, comprenant en outre un revêtement formé sur la première surface de l'article pour couvrir l'oxine de cuivre sur celle-ci.

3. Article de construction selon la revendication 2, dans lequel ledit revêtement est choisi dans le groupe comprenant les peintures primaires, les enduits et les peintures.

4. Article de construction selon la revendication 1, dans lequel la solution comprend 0,5 % à 1 % en poids d'oxine de cuivre.

5. Article de construction selon la revendication 1, l'article de construction étant choisi dans le groupe comprenant les supports de tuiles, les planchers, les sous-faces, les habillages, les matériaux de platelage, les clôtures, les couvertures de toit, les matériaux de bardage et de gainage.

6. Article de construction selon la revendication 1, ledit article de construction comprenant un panneau.

7. Article de construction selon la revendication 1, ledit article de construction comprenant une planche.

8. Article de construction selon la revendication 1, ledit article de construction comprenant un piquet.

9. Procédé de formation d'un panneau en fibrociment qui est résistant au développement de moisissures, comprenant :
la formation d'un panneau de fibrociment ayant une première surface ; et
l'application d'oxine de cuivre sur ladite première surface par le biais d'une solution comprenant 0,2 % à 1 % d'oxine de cuivre, 1 % à 10 % d'enduit et au moins 50 % d'eau en poids, ladite surface étant choisie dans le groupe comprenant une surface extérieure, une surface non finie, une surface préfinie et une surface finie.

10. Procédé selon la revendication 9, dans lequel la formation d'un article de construction comprend la formation d'une planche.

11. Procédé selon la revendication 9, dans lequel la formation d'un article de construction comprend la formation d'un piquet.

12. Procédé selon la revendication 9, comprenant en outre l'application d'un enduit sur l'article en fibrociment après application de la solution d'oxine de cuivre sur la première surface de l'article.

13. Procédé selon la revendication 9, dans lequel l'application dudit oxime de cuivre comprend la pulvérisation d'une solution contenant ledit oxime de cuivre, directement sur la première surface.

14. Procédé selon la revendication 9, dans lequel l'application dudit oxime de cuivre comprend l'application d'une solution ayant une viscosité entre 1 et 1000 centipoises.

15. Procédé selon la revendication 9, dans lequel la solution d'oxine de cuivre est appliquée sur la première surface par un procédé choisi dans le groupe comprenant l'enduction par pulvérisation, l'enduction par trempage, le revêtement en rideau, le revêtement au rouleau ou à la brosse, l'immersion et le revêtement sous vide.

16. Procédé selon la revendication 9, dans lequel ladite solution comprend 0,5 % en poids d'oxine de cuivre.

17. Procédé selon la revendication 9 ou 16, dans lequel ladite solution comprend 4 % à 8 % d'enduit latex et 75 % à 95 % d'eau en poids.

18. Procédé selon la revendication 17, dans lequel ladite solution comprend 6 % d'enduit latex et 93,5 % d'eau en poids.
